# DEMANDE DE BREVET EUROPEEN

(11) **EP 2 360 658 A1**
(43) Date de publication de la demande: **24.08.2011**
(21) Numéro de dépôt: 11152167.0
(22) Date de dépôt: 26.01.2011
(51) Int. Cl.: G09B 21/02

(54) **Dispositif de commande d'un afficheur braille, afficheur braille et procédé de commande associé**

(30) Priorité: 28.01.2010 FR 1050604
(71) Demandeur: Eurobraille, 75019 Paris (FR)
(72) Inventeur: Mauduit Damien, 91240 Saint Michel sur Orge (FR); Poitou Didier, 78550 Dannemarie (FR)
(74) Mandataire: Cabinet Plasseraud

(57) **Abrégé**

L'invention concerne un procédé et dispositif de commande (9) d'un afficheur braille (2) comprenant une plage de lecture propre à afficher une partie d'un texte sous forme braille, ladite plage de lecture comprenant une rangée de cellules brailles (4). Le dispositif de commande (9) comprend :
- des émetteurs (14) aptes à émettre chacun un faisceau lumineux au droit de chaque cellule braille (4) ;
- des récepteurs aptes à réceptionner chacun un faisceau lumineux réfléchi par au moins un doigt d'un utilisateur, lorsque ledit doigt est situé sur une cellule braille (4) ;
- une unité de calcul (13) propre à déterminer la position ou les positions successives du doigt de l'utilisateur par rapport à la plage de lecture en fonction des faisceaux lumineux détectés, l'unité de calcul étant apte à déclencher des commandes de navigation dans le texte en fonction des positions déterminées.

## Description

L'invention concerne un dispositif de commande d'un afficheur braille, un afficheur braille et procédé de commande de déclenchement de commandes de navigation sur cet afficheur.

En particulier, l'invention se rapporte à un dispositif permettant de commander un système équipé d'une plage de lecture braille à partir de position et de mouvements des doigts sur la plage de lecture braille, c'est-à-dire sur la plage destinée à la lecture d'information sous forme braille.

Certains afficheurs brailles comportent des cellules brailles disposées côte à côte pour former une rangée, appelée plage de lecture, et des boutons de commande de déclenchement de commandes de navigation dans un texte, tel que, le retour à la ligne, le retour au début ou à la fin d'une page, le clic etc. Les boutons de commande sont espacés les uns des autres afin que l'utilisateur puisse facilement les distinguer les uns des autres. Ces afficheurs brailles sont encombrants.

Un but de la présente invention est de proposer un dispositif et un procédé de commande permettant de réduire la taille d'un afficheur braille.

Par ailleurs, les doigts d'une personne non voyante utilisant ces afficheurs brailles vont de la plage de lecture vers les boutons de commande. Il en résulte une perte de temps.

Un autre but de l'invention est de proposer un dispositif et un procédé de commande qui permette une lecture et une écriture plus rapide et plus ergonomique.

La largeur d'une cellule braille est d'environ 5 mm. Un doigt même très fin couvre au moins deux cellules brailles. Un doigt plus épais peut, quant à lui, couvrir trois ou quatre cellules brailles. De plus, des utilisateurs différents n'ont pas des doigts de la même taille. En effet, un enfant ou une femme aura des doigts plus fins qu'un homme. Enfin, un utilisateur aura pour habitude de disposer ses doigts perpendiculairement à la plage de lecture tandis qu'un autre utilisateur aura pour habitude de disposer ceux-ci transversalement à la plage de lecture, c'est-à-dire avec un angle de 45° par rapport à celle-ci.

Un autre but de l'invention est de proposer un dispositif et un procédé de commande précis quelque soit la taille des doigts de l'utilisateur et quelque soit ses habitudes de lecture.

A cet effet, l'invention a pour objet un dispositif de commande d'un afficheur braille selon la revendication 1.

Suivant des modes particuliers de réalisation le dispositif de commande comporte l'une ou plusieurs des caractéristiques des revendications dépendantes.

L'invention a également pour objet un afficheur braille selon la revendication 10.

Enfin, l'invention a également pour objet un procédé de commande d'un afficheur braille selon la revendication 11.

Suivant des modes particuliers de réalisation, le procédé de commande comporte l'une ou plusieurs des caractéristiques des revendications dépendantes de la revendication 11.

L'invention sera mieux comprise à la lecture de la description qui va suivre, donnée uniquement à titre d'exemple, en se référant aux dessins, sur lesquels :
- la figure 1 est une vue schématique en coupe d'un afficheur braille selon l'invention ;
- la figure 2 est une vue schématique d'une partie de la face d'un afficheur braille selon l'invention ;
- la figure 3 est un diagramme représentatif d'une partie des étapes du procédé de commande selon l'invention ;
- la figure 4 est un graphe représentatif de l'intensité du faisceau lumineux réceptionné par les récepteurs d'une plage de lecture ;
- la figure 5 est un diagramme représentatif d'une partie des étapes du procédé de commande selon l'invention ; et
- la figure 6 est un graphe représentant un mouvement d'un doigt se déplaçant sur la plage de lecture.

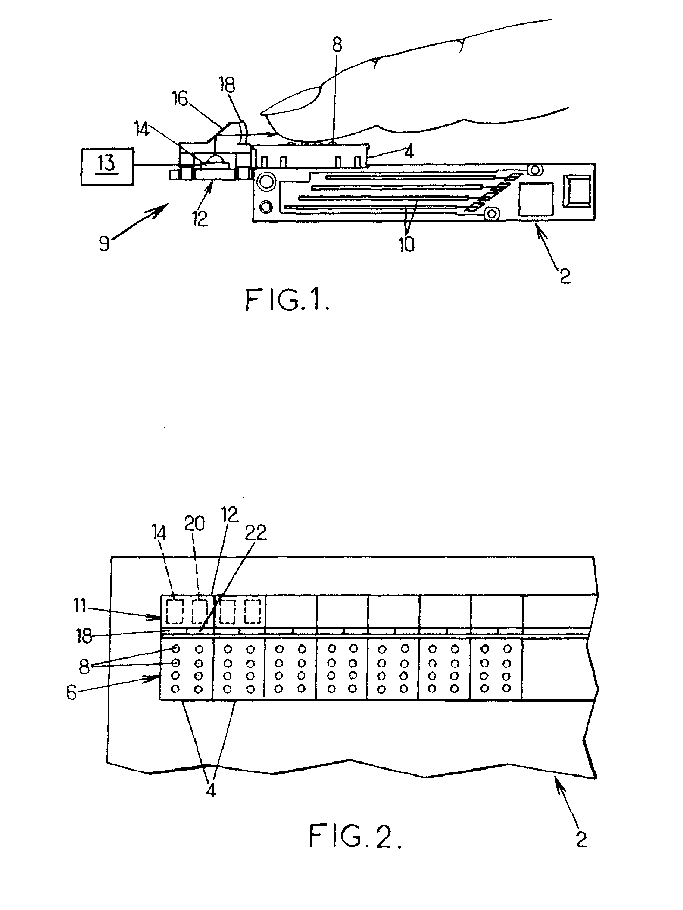

En référence aux figures 1 et 2, l'afficheur braille 2 selon l'invention comporte des cellules brailles 4, par exemple trente-deux cellules brailles, disposées côte à côte pour former une rangée appelée plage de lecture 6.

Chaque cellule braille 4 comprend huit dactyles 8 mobiles verticalement. Les dactyles 8 sont commandés indépendamment les uns des autres en positon haute ou basse par des barres piézo-électriques 10. Une combinaison de la position de huit dactyles 8 forme un caractère.

L'afficheur braille 2 comporte en outre un dispositif de commande 9 selon l'invention. Ce dispositif de commande 9 comprend une barre optique 11 qui s'étend parallèlement à la plage de lecture 6, et une unité de calcul 13.

La barre optique 11 est constituée par un nombre de dispositifs de détection optique 12 égal au nombre de cellules brailles 4, soit dans l'exemple décrit trente-deux dispositifs de détection optique 12. Chaque dispositif de détection optique 12 est agencé adjacent à une cellule braille 4.

Chaque dispositif de détection optique 12 comporte un émetteur 14, par exemple une diode électroluminescente, apte à émettre un faisceau lumineux, une surface réfléchissante 16 inclinée à 45° par rapport à la verticale pour réfléchir le faisceau lumineux émis par l'émetteur 14, et une première lentille convergente 18 propre à focaliser le faisceau lumineux au droit de la cellule braille 4. La première lentille convergente 18 permet de limiter la distance de détection du doigt.

Le faisceau lumineux est, par exemple, un faisceau infrarouge.

Chaque dispositif optique 12 comporte en outre un récepteur 20 apte à réceptionner le faisceau lumineux réfléchi par un doigt, lorsqu'un doigt est positionné au-dessus de la cellule braille adjacente au dispositif optique contenant le récepteur 20, et une seconde lentille convergente 22 propre à focaliser le faisceau lumineux réfléchi, vers le récepteur 20.

Le récepteur 20 est, par exemple, un phototransistor. Il réceptionne une valeur d'intensité nulle lorsqu'il n'y a pas de doigt au dessus de la cellule braille 4.

Pour simplifier la compréhension de l'invention, le récepteur 20 est apte à réceptionner le faisceau lumineux réfléchi par un doigt situé sur une cellule braille 4 est appelé récepteur 20 associé à cette cellule braille 4.

L'unité de calcul 13 est reliée à chaque émetteur 14 pour commander successivement l'émission de celle-ci à une fréquence comprise entre 50 Hertz et 150 Hertz, et de préférence égale à 50 Hertz.

L'unité de calcul 13 est également reliée à chaque récepteur 20 pour réceptionner les valeurs des intensités des faisceaux lumineux captés par les récepteurs, et les traiter selon le procédé de commande décrit ci-dessous pour déclencher des commandes de navigation telles que le clic, le double-clic, le retour à la ligne, le positionnement du curseur en haut ou en bas de page.

Selon l'invention, ce procédé de commande permet de déterminer la présence et la position d'un doigt quelque soit sa largeur.

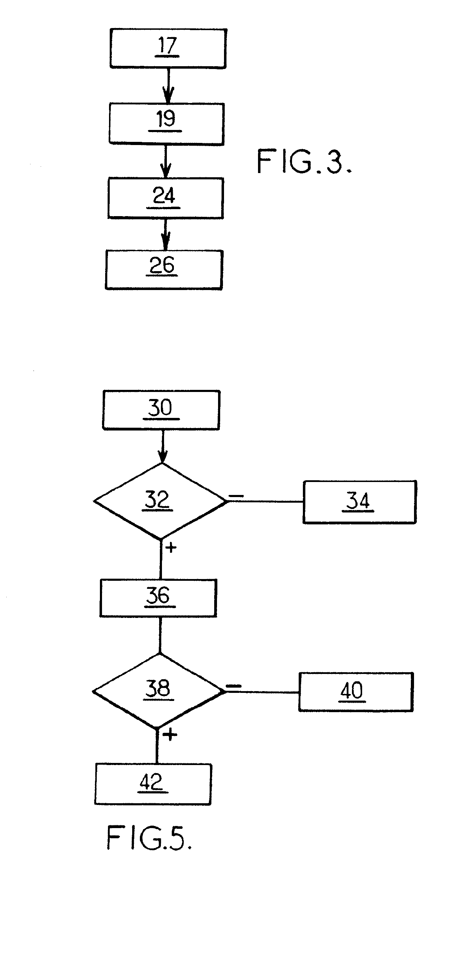

En référence à la figure 3, le procédé débute par une étape 17 d'émission, par chaque émetteur 4, d'un faisceau lumineux au droit de chaque cellule braille 4.

Cette étape est suivie par une étape 19 de réception ou ne non réception d'un faisceau lumineux réfléchi pour l'ensemble des récepteurs 20 de la plage de lecture. Les récepteurs associés à une cellule braille 4 recouverte d'un doigt d'un utilisateur réceptionnent un faisceau lumineux et transmettent à l'unité de calcul 13 une valeur d'intensité non nulle.

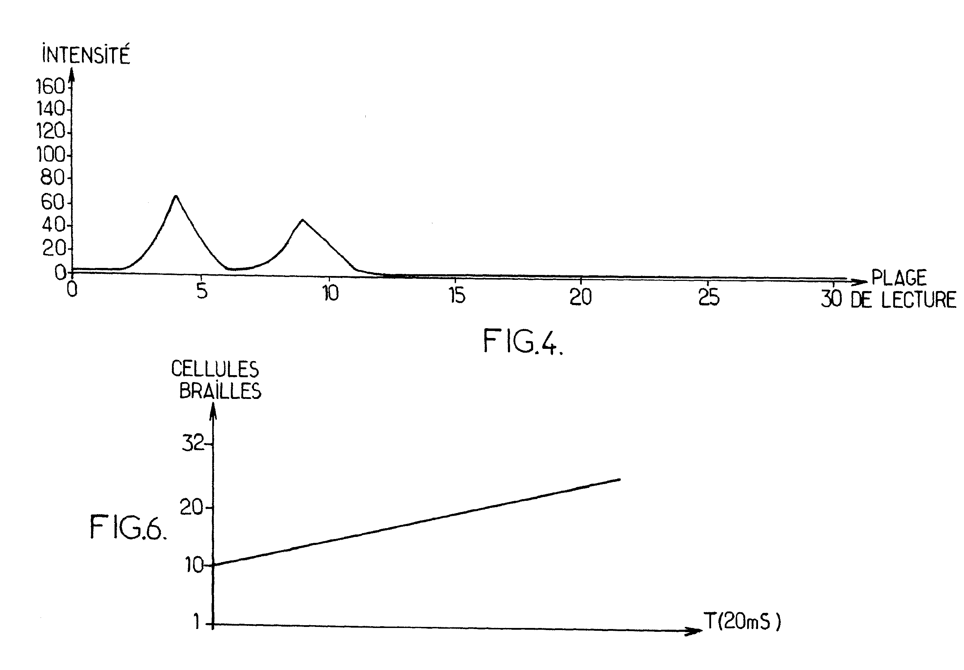

La figure 4 représente l'intensité des faisceaux lumineux détectés par les trente-deux récepteurs 20 de la barre optique, lorsqu'un doigt est positionné sur les quatrième et neuvième cellules brailles.

Au cours d'une étape 24, chaque récepteur 20 de la plage de lecture 6 transmet à l'unité de calcul 13 une valeur d'intensité du faisceau lumineux réceptionné par lesdits récepteurs 20 à un instant donné , lesdites valeurs d'intensité constituent une séquence de valeurs d'intensité.

Au cours d'une étape 26, l'unité de calcul 13 recherche des sommets de pics ou maximums locaux parmi lesdites valeurs d'intensité d'une séquence, par recherche des passages d'une pente positive à une pente négative. Cette recherche peut, par exemple être réalisée par dérivation des valeurs d'intensité et par recherche du passage de la dérivée d'un nombre supérieur à zéro à un nombre inférieur à zéro.

Les sommets de pics sont représentatifs de la présence d'un doigt sur la cellule braille 4 associée au récepteur 20 ayant réceptionné la valeur d'intensité formant le sommet de pic.

Ces sommets de pics sont représentatifs de la présence d'un doigt, et cela quelque soit la taille des doigts, et même si deux doigts sont accolés l'un à l'autre.

Par exemple, le tableau ci-dessous représente un exemple de détection de deux doigts accolés positionnés entre la cellule braille numérotée 4 et la cellule braille numérotée 6. La valeur 1 signifie la présence d'un sommet de pic. Seules les 13 premières cellules ont été considéré dans le tableau. L'absence de valeur entre les deux sommets de pics est représentative de l'espace entre les deux doigts.

| Numéro des cellules brailles | 1 | 2 | 3 | 4 | 5 | 6 | 7 | 8 | 9 | 10 | 11 | 12 | 13 |
|---|---|---|---|---|---|---|---|---|---|---|---|---|---|
| Valeurs de l'intensité | 0 | 0 | 2 | 8 | 4 | 10 | 6 | 2 | 0 | 0 | 0 | 0 | 0 |
| Valeurs dérivées | 0 | 0 | 2 | 6 | -4 | 6 | -4 | -4 | -2 | 0 | 0 | 0 | 0 |
| Séquence | | | | 1 | | 1 | | | | | | | |

Le procédé selon l'invention permet également de déclencher des commandes de navigation par des mouvements de l'utilisateur sur la plage de lecture, ces mouvements étant détectés par les dispositifs de détection optique 12.

Les mouvements de déclenchement des commandes de navigation sont choisis pour ne pas être confondus avec des mouvements couramment utilisés par les personnes non voyantes, tel que le passage de deux doigts sur la plage de lecture 6 pour nettoyer les dactyles encrassés, ou, des tapotements des doigts devant la plage de lecture pour manifester un mouvement d'énervement.

La barre optique 11 permet de détecter des mouvements volontaires précis des doigts de l'utilisateur. En particulier, des mouvements de déplacement des doigts devant la plage de lecture 6, c'est-à-dire selon un axe horizontal, et des mouvements de déplacements de lever des doigts de la plage de lecture 6, c'est-à-dire selon un axe vertical.

Par exemple, la commande de clic peut être réalisée par une succession de présence et d'absence du doigt sur la cellule braille. Dans ce cas, le doigt est d'abord posé sur la cellule braille 4 puis est levé de celle-ci, par exemple deux ou trois fois.

Lorsque un tel enchaînement est réalisé, l'unité de calcul 13 est apte à déterminer une alternance de sommets de pics et de signal de valeur nulle au niveau d'une cellule braille donnée et à une fréquence donnée.

La durée d'absence dudit doigt sur ladite cellule braille est comprise entre 20 ms à 400 ms, et est, de préférence, comprise entre 40 à 200 ms ; et la durée de présence dudit doigt sur ladite cellule braille est comprise entre 20 ms et 600 ms et est, de préférence, comprise entre 40 ms et 300 ms pour que le mouvement soit considéré comme une commande de déclenchement d'une commande de navigation.

En variante, une autre commande de navigation est réalisée par une succession de présence et d'absence de plusieurs doigts.

Une autre commande peut être réalisée par le passage du doigt de l'utilisateur de la fin de la plage de lecture au début de celle-ci avec une vitesse comprise dans une plage de vitesse prédéterminée. Ce passage peut, par exemple, définir la commande d'avance de la plage de lecture 6. Dans ce cas, le recul de la plage de lecture sera déclenché par un mouvement rapide du doigt de l'utilisateur de gauche à droite sur la plage de lecture.

La vitesse de passage du doigt est par exemple comprise entre 16 cellules brailles 4 par seconde et 200 cellules brailles 4 par seconde, et est de préférence égale à 50 cellules brailles 4 par seconde.

En référence à la figure 5, un tel mouvement est détecté selon une procédure comportant une étape 30 de répétition, à une fréquence prédéfinie, des étapes 17, 19, 24 et 26 telles que décrite ci-dessus.

Ladite fréquence prédéfinie est comprise entre 50 Hertz et 150 Hertz, et est de préférence égale à 50 Hertz.

Au cours d'une étape 32, l'unité de calcul 13 recherche si lesdits sommets de pics trouvés dans des séquences sensiblement subséquentes les une aux autres sont réceptionnés par des récepteurs voisins.

Selon la présente invention, le terme « des séquences sensiblement subséquentes » signifie des séquences se suivant exactement ou des séquence séparées par une ou deux séquences intermédiaires.

Selon la présente invention, le terme « des récepteurs voisins» signifie des récepteurs directement adjacents les uns aux autres ou des récepteurs séparés par un, ou deux récepteurs intermédiaires.

Par exemple, le tableau ci-dessous représente un exemple de succession de sommets de pics représentative d'un mouvement de doigt sur la plage de lecture braille.

| Numéro des cellules brailles | 1 | 2 | 3 | 4 | 5 | 6 | 7 | 8 | 9 | 10 | 11 | 12 |
|---|---|---|---|---|---|---|---|---|---|---|---|---|
| 1 ière séquence | | | | | | | | 1 | | | | |
| 2 ième séquence | | | | | | | | 1 | | | | |
| 3 ième séquence | | | | | | | 1 | | | | | |
| 4 ième séquence | | | | | | | 1 | | | | | |
| 5 ième séquence | | | | | | 1 | | | | | | |
| 6 ième séquence | | | | | | 1 | | | | | | |

Si l'unité de calcul 13 ne trouve plus de sommet de pics, le procédé s'arrête, au cours d'une étape 34.

Lorsqu'un nombre prédéfini de sommets de pics sur des cellules brailles voisines ont été déterminé, l'unité de calcul 13 calcule, au cours d'une étape 36, le coefficient directeur d'une droite, illustrée sur la figure 6. représentant la présence d'un sommet de pic sur les cellules brailles de la barre optique en fonction du temps. Ce coefficient directeur est, par exemple, calculé par une méthode de régression linéaire.

Au cours d'une étape 38, l'unité de calcul 13 détermine si ce coefficient directeur appartient à une plage de coefficient directeur prédéfinie définissant une commande intentionnelle de l'utilisateur.

Ladite plage de coefficient directeur est comprise entre 1 / 3 et 1.

Si le coefficient directeur n'appartient pas à la plage prédéfinie, le procédé s'arrête au cours d'une étape 40.

Si le coefficient directeur appartient à la plage prédéfinie, l'unité de calcul 13 déclenche, au cours d'une étape 42, la commande, telle que par exemple, la commande d'avance de la plage de lecture 6.

Avantageusement, le procédé selon l'invention permet de distinguer deux doigts collés d'un doigt épais.

Avantageusement, le dispositif selon l'invention est d'utilisation facile.

Avantageusement, la personne non voyante sent immédiatement sous ses doigts que les commandes demandées ont bien été réalisées.

## Revendications

1. Dispositif de commande (9) d'un afficheur braille (2), ledit afficheur braille (2) comprenant une plage de lecture (6) propre à afficher une partie d'un texte sous forme braille, ladite plage de lecture (6) comprenant une rangée de cellules brailles (4), **caractérisé en ce que** le dispositif de commande (9) comprend :
- des émetteurs (14) aptes à émettre chacun un faisceau lumineux au droit de chaque cellule braille (4) ;
- des récepteurs (20) aptes à réceptionner chacun un faisceau lumineux réfléchi par au moins un doigt d'un utilisateur, lorsque ledit doigt est situé sur une cellule braille (4) ;
- une unité de calcul (13) propre à déterminer la position ou les positions successives du doigt de l'utilisateur par rapport à la plage de lecture (6) en fonction des faisceaux lumineux détectés, l'unité de calcul (13) étant apte à déclencher des commandes de navigation dans le texte en fonction des positions déterminées.

2. Dispositif de commande (9) selon la revendication 1 dans lequel le récepteur (20) réceptionnant le faisceau lumineux réfléchi par un doigt situé sur une cellule braille (4) est appelé récepteur (20) associé à ladite cellule braille (4), caractérisé en que chaque récepteur (20) de la plage de lecture (6) est propre à transmettre une valeur d'intensité du faisceau lumineux réceptionné à l'unité de calcul (13) ; lesdites valeurs d'intensité constituant une séquence de valeurs d'intensité ; et en ce que l'unité de calcul (13) est apte à rechercher au moins un sommet de pic parmi lesdites valeurs d'intensité, ledit sommet de pic étant représentatif de la présence d'un doigt sur une cellule braille (4) dont le récepteur (20) associé a réceptionné la valeur d'intensité formant le sommet de pic.

3. Dispositif de commande (9) selon la revendication 2, **caractérisé en ce que** chaque récepteur (20) de la plage de lecture (6) est propre à transmettre périodiquement une valeur d'intensité du faisceau réceptionné, à une fréquence prédéfinie ; lesdites valeurs d'intensité obtenues à chaque période, constituant des séquences de valeurs d'intensité subséquentes les une aux autres.

4. Dispositif de commande (9) selon la revendication 3, **caractérisé en ce que** la fréquence prédéfinie est comprise entre 50 Hertz et 150 Hertz, et est de préférence égale à 50 Hertz.

5. Dispositif de commande (9) selon la revendication 3 ou 4, caractérisé en que l'unité de calcul (13) est apte à rechercher si lesdits sommets de pics trouvés dans des séquences sensiblement subséquentes les une aux autres sont réceptionnés par des récepteurs (20) voisins; et en ce que l'unité de calcul (13) est propre à calculer le coefficient directeur d'une droite qui passe au plus près desdits sommets de pics obtenus pour des récepteurs voisins (20) et à vérifier si ledit coefficient directeur appartient à une plage prédéfinie; lorsque le coefficient directeur appartient à ladite plage prédéfinie, l'unité de calcul (13) est apte à déclencher une commande de navigation.

6. Dispositif de commande (9) selon l'une quelconque des revendications 1 à 5, caractérisé en qu'il est apte à détecter des mouvements du doigt le long de la plage de lecture (6); lesdits mouvements étant des commandes de déclenchement de commandes de navigation.

7. Dispositif de commande (9) selon la revendication 6, caractérisé en que la vitesse desdits mouvements est comprise entre 16 cellules brailles (4) par seconde et 200 cellules brailles (4) par seconde, et est de préférence égale à 50 cellules brailles (4) par seconde.

8. Dispositif de commande (9) selon l'une quelconque des revendications 1 à 5, caractérisé en qu'il est apte à détecter des successions de présence et d'absence d'au moins un doigt sur au moins une cellule braille (4), lesdites successions étant des commandes de déclenchement de commandes de navigation.

9. Dispositif de commande (9) selon la revendication 8, **caractérisé en ce que** la durée d'absence dudit doigt sur ladite cellule braille (4) est comprise entre 20 ms à 400 ms, et est, de préférence, comprise entre 40 à 200 ms et **en ce que** la durée de présence dudit doigt sur ladite cellule braille (4) est comprise entre 20 ms et 600 ms et est, de préférence, comprise entre à et 300 ms.

10. Afficheur braille (2) comprenant une plage de lecture (6) propre à afficher une partie d'un texte sous forme braille, ladite plage de lecture (6) comprenant une rangée de cellules brailles (4), et un dispositif de commande (9) selon l'une quelconque des revendications 1 à 9.

11. Procédé de commande d'un afficheur braille (2) par un dispositif de commande (9) selon l'une quelconque des revendications 1 à 9, ledit afficheur braille (2) comprenant une plage de lecture (6) propre à afficher une partie d'un texte sous forme braille, ladite plage de lecture (6) comprenant une rangée de cellules brailles (4); le dispositif de commande (9) comprenant des émetteurs (14), des récepteurs (20) et une unité de calcul (13) ; **caractérisé en ce que** le procédé comporte les étapes suivantes :
a) émission (17), par chaque émetteur (4), d'un faisceau lumineux au droit de chaque cellule braille (4);
b) réception (19) par chaque récepteur (20), d'un faisceau lumineux réfléchi par au moins un doigt d'un utilisateur, lorsque ledit doigt est situé sur une cellule braille (4);
c) détermination (24, 26, 32, 36, 38) de la position ou des positions successives du doigt de l'utilisateur par rapport à la plage de lecture (6) en fonction des faisceaux lumineux détectés;
d) déclenchement (42) des commandes de navigation dans le texte en fonction des positions déterminées.

12. Procédé de commande d'un afficheur braille (2) selon la revendication 11, **caractérisé en ce que** l'étape de détermination (24, 26) de la position du doigt de l'utilisateur comporte les étapes suivantes :
e) transmission (24), par chaque récepteur (20) de la plage de lecture (6), à l'unité de calcul (13), d'une valeur d'intensité du faisceau lumineux réceptionné; lesdites valeurs d'intensité constituant une séquence de valeurs d'intensité; et
f) recherche (26) d'au moins un sommet de pic parmi lesdites valeurs d'intensité d'une séquence, ledit sommet de pic étant représentatif de la présence d'un doigt sur une cellule braille (4) dont le récepteur (20) associé a réceptionné la valeur d'intensité formant le sommet de pic.

13. Procédé de commande selon la revendication 12, **caractérisé en ce que** l'étape de détermination (24, 26, 32, 36, 38) des positions successives du doigt de l'utilisateur comporte les étapes suivantes :
- répétition (30) des étapes a), b) e) et f) ;
- recherche (32) si lesdits sommets de pics trouvés dans des séquences sensiblement subséquentes les unes aux autres sont réceptionnés par des récepteurs (20) voisins;
- calcul (36) du coefficient directeur d'une droite qui passe au plus près desdits sommets de pics obtenus pour des récepteurs voisins (20);
- vérification (38) que ledit coefficient directeur appartient à une plage prédéfinie, lorsque le coefficient directeur appartient à ladite plage prédéfinie, déclenchement (42) d'une commande de navigation.
